(19) Europäisches Patentamt
European Patent Office
Office européen des brevets

(11) **EP 3 667 799 A1**

(12) **EUROPEAN PATENT APPLICATION**
published in accordance with Art. 153(4) EPC

(43) Date of publication:
**17.06.2020 Bulletin 2020/25**

(21) Application number: **18841524.4**

(22) Date of filing: **01.08.2018**

(51) Int Cl.:
*H01M 10/0562* [(2010.01)]  *C01B 32/182* [(2017.01)]
*C01B 32/225* [(2017.01)]  *H01M 4/133* [(2010.01)]
*H01M 4/62* [(2006.01)]  *H01M 10/0565* [(2010.01)]
*H01M 4/131* [(2010.01)]

(86) International application number:
**PCT/JP2018/028787**

(87) International publication number:
**WO 2019/026940 (07.02.2019 Gazette 2019/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.08.2017 JP 2017151828**

(71) Applicant: **Sekisui Chemical Co., Ltd.
Osaka-shi, Osaka 530-8565 (JP)**

(72) Inventors:
• **SAWADA, Yuuki
Mishima-gun
Osaka 618-0021 (JP)**

• **MASUDA, Hiroki
Mishima-gun
Osaka 618-0021 (JP)**
• **NAKASUGA, Akira
Mishima-gun
Osaka 618-0021 (JP)**
• **FUJIWARA, Akihiko
Mishima-gun
Osaka 618-0021 (JP)**

(74) Representative: **Ter Meer Steinmeister & Partner
Patentanwälte mbB
Nymphenburger Straße 4
80335 München (DE)**

(54) **CARBON MATERIAL, POSITIVE ELECTRODE FOR ALL-SOLID-STATE BATTERIES,
NEGATIVE ELECTRODE FOR ALL-SOLID-STATE BATTERIES, AND ALL-SOLID-STATE
BATTERY**

(57)    Provided is a carbon material that can improve the cycle characteristic in charge and discharge of an all-solid-state battery. The carbon material is a carbon material to be contained in a positive electrode and/or a negative electrode of an all-solid-state battery comprising a group 1- or group 2-ionic conductive solid electrolyte, wherein in an X-ray diffraction spectrum of a mixture of the carbon material and Si in a weight ratio of 1 : 1, a ratio a/b is 0.2 or higher and 10.0 or lower, where a represents a height of the highest peak in the range of $2\theta$ of 24° or larger and smaller than 28° and b represents a height of the highest peak in the range of $2\theta$ of 28° or larger and smaller than 30°.

EP 3 667 799 A1

**Description**

Technical Field

The present invention relates to a carbon material, and a positive electrode for an all-solid-state battery, a negative electrode for an all-solid-state battery and an all-solid-state battery, wherein these use the carbon material.

Background Art

In recent years, research on and development of nonaqueous electrolyte secondary batteries have been earnestly carried out toward power storage applications for portable devices, hybrid vehicles, electric vehicles, households and the like, and further energy density enhancement has been demanded.

As examples of such nonaqueous electrolyte secondary batteries, there are known constitutions including a liquid organic electrolyte made by dissolving a lithium salt in a combustible organic solvent. Systems using a liquid organic electrolyte, however, have problems of leakage of the organic electrolyte from batteries, ignition in short circuit, and the like, and a further improvement in safety is demanded.

In order to meet this demand, there is developed an all-solid-state battery using an electrolyte constituted of an inorganic material or a polymer material, that is, a solid electrolyte, in place of a liquid organic electrolyte, (for example, Non Patent Literature 1).

Electrodes (positive electrode, negative electrode) of all-solid-state batteries need to maintain a good contact state of electrode active materials (positive electrode active material, negative electrode active material) with a solid electrolyte, and additionally need to have electron conduction paths successfully formed therein. With regard to this, carbon black such as Ketjen black is used in the battery disclosed in Patent Literature 1 in order to secure an electron-conductive network.

Citation List

Patent Literature

Patent Literature 1: Japanese Patent Laid-open No. 2014-29777

Non Patent Literature

Non Patent Literature 1: Lithium Secondary Battery, Chapter 7, pp.163(2008), Ohmsha, Ltd.

Summary of Invention

Technical Problem

In the case of using carbon black for electrodes of an all-solid-state battery as in Patent Literature 1, however, it is still difficult to form sufficiently good electron conduction paths. Hence, there are problems that the electric resistance of a positive electrode and a negative electrode of the all-solid-state battery increases and in particular, battery characteristics such as the cycle characteristic decrease. Further the case of using carbon black has problems that it is disadvantageous to forming ionic conduction paths of the solid electrolyte and additionally also disadvantageous to improve the energy density.

An object of the present invention is to provide a carbon material that can improve the cycle characteristic in charge and discharge of an all-solid-state battery, as well as a positive electrode for an all-solid-state battery and a negative electrode for an all-solid-state battery using the carbon material and also an all-solid-state battery.

Solution to Problem

The carbon material according to the present invention is a carbon material to be contained in a positive electrode and/or a negative electrode of an all-solid-state battery comprising a group 1- or group 2-ionic conductive solid electrolyte, wherein in an X-ray diffraction spectrum of a mixture of the carbon material and Si in a weight ratio of 1 : 1, a ratio a/b is 0.2 or higher and 10.0 or lower, where a represents a height of the highest peak in the range of $2\theta$ of 24° or larger and smaller than 28° and b represents a height of the highest peak in the range of $2\theta$ of 28° or larger and smaller than 30°.

In a specific embodiment of the carbon material according to the present invention, the carbon material has a graphene layered structure.

In another specific embodiment of the carbon material according to the present invention, the carbon material has a two-dimensionally extending shape.

In still another specific embodiment of the carbon material according to the present invention, the carbon material is a carbon material having a graphite structure wherein the graphite is partially exfoliated.

In yet another specific embodiment of the carbon material according to the present invention, a ratio y/x is 0.15 or higher where y represents an amount of methylene blue adsorbed ($\mu$mol/g) per 1 g of the carbon material as measured based on the difference in absorbance between a methanol solution of methylene blue of a concentration of 10 mg/L and a supernatant liquid obtained by adding the carbon material to the methanol solution of methylene blue and centrifuging a resulting mixture; and x represents a BET specific surface area ($m^2$/g) of the carbon material.

In yet another specific embodiment of the carbon material according to the present invention, a D/G ratio is in the range of 0.05 or higher and 0.8 or lower, where a peak intensity ratio between the D band and the G band in a Raman spectrum of the carbon material is taken as the D/G ratio.

In yet another specific embodiment of the carbon material according to the present invention, when the above-mentioned carbon material is designated as a first carbon material, the carbon material further comprises a second carbon material different from the first carbon material, wherein the carbon material satisfies $0.01 \leq M/N \leq 100$ where M represents a weight of the first carbon material and N represents a weight of the second carbon material.

The positive electrode for an all-solid-state battery according to the present invention comprises the carbon material constituted according to the present invention, a positive electrode active material, and a group 1- or group 2-ionic conductive solid electrolyte.

In a specific embodiment of the positive electrode for an all-solid-state battery according to the present invention, the ionic conductive solid electrolyte is an oxide-based solid electrolyte or a sulfide-based solid electrolyte.

The negative electrode for an all-solid-state battery according to the present invention comprises the carbon material constituted according to the present invention, a negative electrode active material, and a group 1- or group 2-ionic conductive solid electrolyte.

In a specific embodiment of the negative electrode for an all-solid-state battery according to the present invention, the ionic conductive solid electrolyte is an oxide-based solid electrolyte or a sulfide-based solid electrolyte.

The all-solid-state battery according to the present invention comprises the positive electrode for an all-solid-state battery according to the present invention and/or the negative electrode for an all-solid-state battery according to the present invention.

Advantageous Effects of Invention

By use of the carbon material according to the present invention, good electron conduction paths and ionic conduction paths can be formed in electrodes such as a positive electrode and a negative electrode of an all-solid-state battery. Hence, the cycle characteristic of the all-solid-state battery can to be improved. Further, use of the carbon material according to the present invention can also reduce useless spaces in electrodes of an all-solid-state battery, and thus the electrode density of a positive electrode and a negative electrode and therefore the energy density of the all-solid-state battery can also be improved.

Description of Embodiments

Hereinafter, the present invention will be described in detail.

The scope of the present invention is indicated by the claims, and it is intended that all changes and modifications within the equivalent meaning and the scope of the claims are encompassed thereby.

(Carbon material)

The carbon material according to the present invention is a carbon material to be contained in a positive electrode and/or a negative electrode for an all-solid-state battery. The all-solid-state battery is not especially limited, and examples thereof include primary batteries, secondary batteries, air primary batteries and air secondary batteries. In the all-solid-state battery, a group 1- or group 2-ionic conductive solid electrolyte is used.

In the present invention, the following is satisfied in an X-ray diffraction spectrum of a mixture of the carbon material and Si in a weight ratio of 1 : 1, a ratio falls in the following range: the ratio a/b is 0.2 or higher and 10.0 or lower, where a represents a height of the highest peak in the range of $2\theta$ of 24° or larger and smaller than 28° and b represents a height of the highest peak in the range of $2\theta$ of 28° or larger and smaller than 30°. Here, the Si to be used can be, for example, a silicon powder having a particle diameter $\phi$ of 100 nm or smaller.

The X-ray diffraction spectrum can be measured by wide-angle X-ray diffractometry. The X-ray to be used can be a CuKα radiation (wavelength: 1.541 Å). An X-ray diffractometer to be used can be, for example, SmartLab (Rigaku Corp.).

It is preferable that the carbon material according to the present invention have a graphene layered structure. In the X-ray diffraction spectrum, the peak assigned to the graphene layered structure represented by a graphite structure emerges nearly at $2\theta = 26.4°$. On the other hand, the peak assigned to Si such as the silicon powder exhibits nearly at $2\theta = 28.5°$. Therefore, in the case where the carbon material has the graphene layered structure, the above ratio a/b can be determined from a peak height ratio between the peak nearly at $2\theta = 26.4°$ and the peak nearly at $2\theta = 28.5°$ (the peak nearly at $2\theta = 26.4°$ / the peak nearly at $2\theta = 28.5°$).

Then, examples of the carbon material having the graphene layered structure include graphite, exfoliated graphite, and partially exfoliated graphite described later.

Since the carbon material according to the present invention has a ratio a/b described above of 0.2 or higher and 10.0 or lower, the cycle characteristic in charge and discharge of an all-solid-state battery can be improved. The reason therefor can be interpreted as follows in comparison, for example, with conventional carbon black.

It is difficult for the conventional carbon black, which is particles, to form sufficiently good electron conduction paths particularly in a positive electrode and/or a negative electrode using a solid electrolyte. Hence, in the case of using the carbon black as an electrode material of a positive electrode and a negative electrode of an all-solid-state battery, there are problems that the electric resistance of the positive electrode and the negative electrode increases and therefore that particularly battery characteristics such as the cycle characteristic decrease.

Although the carbon black has a feature of having a large number of voids, which a solid electrolyte is unlikely to penetrate, the void portions become spaces not at all taking part in the battery reaction. Hence, in the case of using the carbon black, there is another problem that it is disadvantageous to the improvement of the energy density, in addition to disadvantage to the formation of ionic conduction paths of the solid electrolyte.

By contrast, in the carbon material according to the present invention, since the above ratio a/b is 0.2 or higher and 10.0 or lower, good electron conduction paths and ionic conduction paths can be formed in electrodes such as a positive electrode and a negative electrode of an all-solid-state battery. Hence, this enables the cycle characteristic of the all-solid-state battery to be improved. Further by use of the carbon material according to the present invention, useless spaces can be reduced in the electrodes of the all-solid-state battery, and therefore the electrode density of the positive electrode and the negative electrode, that is, the energy density of the all-solid-state battery can be improved.

Here, if the a/b is lower than 0.2, the formation of the graphite structure in the carbon material itself is little, and therefore the carbon material has low electron conductivity and additionally has defects. Thus, there arise risks that the resistance value of a positive electrode and a negative electrode increases to decrease battery characteristics.

If the a/b is higher than 10.0, the carbon material itself is rigid. Thus, it is difficult to disperse the carbon material in a positive electrode and a negative electrode of an all-solid-state battery, and also contact points between the carbon material and the active material are few. Due to these, there arises a risk that it is difficult to form good electron conduction paths.

In view of easily forming electron conduction paths in electrodes of an all-solid-state battery, the a/b is preferably 0.22 or higher and more preferably 0.25 or higher, and preferably 8.0 or lower, more preferably 5.0 or lower, still more preferably 2.5 or lower, especially preferably 1.0 or lower, further especially preferably 0.9 or lower and most preferably 0.8 or lower.

A method of regulating the a/b ratio in the above range involves regulations of the heating condition, the kind of a resin, the amount of the resin and the kind of a raw material of the carbon material in a production method described later.

In the present invention, the particle diameter of the carbon material is preferably 0.1 μm or larger and 100 μm or smaller. Further in view of much more enhancing the handleability, the particle diameter is more preferably 0.5 μm or larger and 50 μm or smaller. Herein, the particle diameter is a value obtained by measuring the size of each particle in a SEM or TEM image and calculating an average particle diameter thereof.

In the present invention, the BET specific surface area of the carbon material is preferably 3 $m^2$/g or larger, in view of securing contact points with the active material much more sufficiently. The BET specific surface area of the carbon material is more preferably 5 $m^2$/g or larger and still more preferably 8 $m^2$/g or larger, in view of securing contact points with the active material still more sufficiently. Further in view of much more enhancing the handleability in fabrication of electrodes, the BET specific surface area of the carbon material is preferably 2,500 $m^2$/g or smaller.

The shape of the carbon material is not especially limited, and includes a two-dimensionally extending shape, a spherical shape, a fibrous shape and an indeterminate shape. A preferable shape of the carbon material is a two-dimensionally extending shape. Examples of the two-dimensionally extending shape include a scaly shape and a platy shape (flat plate).

In the case of using a solid electrolyte in combination with a conventional carbon material, e.g., carbon black, the formation of electroconduction paths is difficult in some cases, since a carbon black dots the solid electrolyte and hardly moves in the solid electrolyte. By contrast, in the case where a carbon material has a two-dimensionally extending shape as described above, much better electroconduction paths can be formed.

Among shapes thereof, the carbon material preferably has a scaly shape. By using those having a scaly shape as the carbon material, contact points with the active material are much more in electrodes to be obtained for a solid-state battery, and it is thus easy to form much better electroconduction paths.

The carbon material includes graphite such as natural graphite, artificial graphite and expanded graphite, and exfoliated graphite. Among these, the carbon material is preferably a carbon material having a graphite structure in which the graphite is partially exfoliated since good electron conduction paths can be much more easily formed. Of course, the carbon material may also be graphene.

The exfoliated graphite is obtained by subjecting an original graphite to an exfoliation treatment, and refers to a graphene sheet stack thinner than the original graphite. The number of graphene sheets stacked in the exfoliated graphite should be smaller than that of the original graphite.

In the exfoliated graphite, the number of graphene sheets stacked is preferably 1,000 or smaller and more preferably 500 or smaller. In the case where the number of graphene sheets stacked is not larger than the upper limit described above, the specific surface area can be much larger.

Here, "having a structure in which graphite is partially exfoliated" refers to having a structure in which in a stack of graphene, graphene layers are separated from each other in the region from their edges to their certain insides, in other words, parts of the graphite are exfoliated at its edges. Further the structure refers to a structure in which in the center portion of the stack, the graphite layers are stacked as in the original graphite or a primary exfoliated graphite. Portions where parts of the graphite are exfoliated at its edges is continuous to the center portion. The carbon material may further contain exfoliate graphite, which is formed by exfoliating the edges of graphite. Therefore, the carbon material having the structure in which graphite is partially exfoliated can be said also to be a partially exfoliated graphite.

As described above, the carbon material having the structure in which graphite is partially exfoliated is excellent in electroconductivity, since graphite layers are stacked in the center portion as in the original graphite or a primary exfoliated graphite. Further the carbon material has a large specific surface area, since it has the structure in which graphite is partially exfoliated.

Hence, the carbon material is higher in the degree of graphitization and much better in the electroconductivity than conventional graphene oxide and carbon black. Further the carbon material has a large specific surface area, since it has the structure in which graphite is partially exfoliated. Further the carbon material can much more increase sites contacting with the active material, since it has a flat plate shape and has a two-dimensional extension. Therefore, when such a carbon material is used for electrodes of an all-solid-state battery, good electron conduction paths can be formed in the electrodes, and battery characteristics of the all-solid-state battery can be thus improved much more.

The carbon material having the structure in which graphite is partially exfoliated can be obtained by preparing a composition containing a graphite or a primary exfoliated graphite and a resin wherein the resin is fixed to the graphite or the primary exfoliated graphite by grafting or adsorption, and pyrolyzing the composition. Here, the resin contained in the composition desirably may be removed, or may partially remain.

By the pyrolysis, the distance between graphene layers in the graphite or the primary exfoliated graphite is expanded. More specifically, in a stack of graphene such as the graphite or the primary exfoliated graphite, the graphene layer spacings are expanded from the edges to the certain insides. That is, a structure can be obtained in which parts of the graphite are exfoliated while in the center-side portion thereof the graphite layers are stacked as in the original graphite or primary exfoliated graphite.

The graphite is a stack of a plurality of graphenes. As the graphite, there can be used natural graphite, artificial graphite, expanded graphite or the like. The expanded graphite has a larger layer spacing between graphene layers than usual graphite. Therefore, the expanded graphite is easily exfoliated. Hence, in the case of using the expanded graphite, the carbon material according to the present invention can much more easily be obtained.

Here, the graphite has the number of stacked layers of graphene of about 100,000 to 1,000,000, and a specific surface area determined according to BET (BET specific surface area) of lower than 25 $m^2/g$. Then, the primary exfoliated graphite may be one having a larger specific surface area than the graphite, since the primary exfoliated is obtained by exfoliating graphite.

In the present invention, the number of stacked layers of graphene in portions where graphite is partially exfoliated in the carbon material having the structure in which graphite is partially exfoliated is preferably 5 or larger and 3,000 or smaller, more preferably 5 or larger and 1,000 or smaller, and still more preferably 5 or larger and 500 or smaller.

In the case where the number of stacked layers of graphene is smaller than the lower limit described above, the number of stacked layers of graphene in portions where graphite is partially exfoliated is small, and therefore connections cannot be made between active materials in electrodes of an all-solid-state battery described later in some cases. Consequently, electron conduction paths in the electrodes are disconnected. Thus, not only the rate characteristic and the cycle characteristic decrease, but also side reactions easily progress. Resultantly the solid electrolyte is liable to be decomposed, in some cases.

In the case where the number of stacked layers of graphene is larger than the upper limit described above, the size of one piece of the carbon material is extremely large, and unevenness in the distribution of the carbon material in electrodes is produced in some cases. Hence, electron conduction paths in the electrodes are undeveloped. Thus, not only the rate characteristic and the cycle characteristic decrease, but also side reactions easily progress. Resultantly the solid electrolyte is liable to be decomposed, in some cases.

A method for calculating the number of stacked layers of graphene is not especially limited, and the number can be found by visual observation using TEM or the like.

The BET specific surface area of the carbon material having the structure in which graphite is partially exfoliated is preferably 25 $m^2/g$ or larger in view of securing contact points with the active material much more sufficiently. That is more preferably 35 $m^2/g$ or larger and still more preferably 45 $m^2/g$ or larger, in view of securing contact points with the active material further much more sufficiently. Then, in view of much more enhancing ease of handleability in fabrication of electrodes, the BET specific surface area of the carbon material is preferably 2,500 $m^2/g$ or smaller.

The carbon material having the structure in which graphite is partially exfoliated can be obtained by first carrying out a step of fabricating a composition in which a resin is fixed on a graphite or a primary exfoliated graphite by grafting or adsorption, and then carrying out a step of pyrolyzing the composition. Here, the resin contained in the composition may be removed or may partially remain.

The amount of the resin in the case where the resin remains in the carbon material is, preferably 1 part by weight or larger and 350 parts by weight or smaller, more preferably 5 parts by weight or larger and 50 parts by weight or smaller and still more preferably 5 parts by weight or larger and 30 parts by weight or smaller, with respect to 100 parts by weight of the carbon material excluding the resin content. If the amount of the remaining resin is smaller than the lower limit, the BET specific surface area cannot be secured in some cases. Further if the amount of the remaining resin is larger than the upper limit, the production cost increases in some cases.

Here, the amount of the resin remaining in the carbon material can be calculated, for example, by measuring the change in weight depending on the heating temperature through thermogravimetric analysis (hereinafter, TG).

In the carbon material having the structure in which graphite is partially exfoliated, the resin may be removed after a composite thereof with the active material is fabricated. As a method of removing the resin, a heat treatment at a temperature equal to or higher than the decomposition temperature of the resin and lower than the decomposition temperature of the active material is preferable. The heat treatment may be carried out in any of the air, an inert gas atmosphere, a low-oxygen atmosphere and vacuum.

The resin to be used for fabrication of a composition in which the resin is fixed on a graphite or a primary exfoliated graphite by grafting or adsorption is not especially limited, but is preferably a polymer of a radically polymerizable monomer. The polymer of a radically polymerizable monomer may be a copolymer of a plurality of radically polymerizable monomers, or may be a homopolymer of a single kind of radically polymerizable monomer.

Examples of such a resin include polypropylene glycol, polyglycidyl methacrylate, polyvinyl acetate, polybutyral, polyacrylic acid and polyethylene glycol.

An example of a method for producing the carbon material having the structure in which graphite is partially exfoliated includes a production method described in International Publication No. WO2014/034156. Specifically, the carbon material can be produced, for example, by carrying out a step of fabricating a composition containing a graphite or a primary exfoliated graphite and a resin, and a step of pyrolyzing the fabricated composition (in an open system).

In the carbon material according to the present invention, when in a Raman spectrum acquired by Raman spectroscopy, the D/G ratio is preferably 0.8 or lower, and more preferably 0.7 or lower, where the peak intensity ratio between the D band and the G band is taken as the D/G ratio. In the case where the D/G ratio is in this range, the electroconductivity of the carbon material itself can be much more enhanced, and the amount of gasses generated can also be much more reduced. Then, the D/G ratio is preferably 0.05 or higher. In this case, the cycle characteristic can be much more improved.

In the carbon material according to the present invention, the ratio y/x is preferably 0.15 or higher, and more preferably 0.15 or higher and 1.0 or lower, where y represents an amount of methylene blue adsorbed ($\mu$mol/g) per 1 g of the carbon material and x represents a BET specific surface area ($m^2/g$) of the carbon material. Further the ratio y/x is still more preferably 0.2 or higher and 0.9 or lower in view of much more easy progress of the adsorption of the active material by the carbon material in preparation of a slurry described later.

The amount of methylene blue adsorbed ($\mu$mol/g) is measure as follows. First, the absorbance (blank) of a methanol solution of methylene blue in a concentration of 10 mg/L is measured. Then, a measurement subject (carbon material) is added to the methanol solution of methylene blue, and the absorbance (sample) of a supernatant obtained by centrifugation is measured. Finally, the amount of methylene blue adsorbed ($\mu$mol/g) per 1 g of the carbon material is calculated from a difference between the absorbance (blank) and the absorbance (sample).

Here, the amount of methylene blue adsorbed and the specific surface area determined by BET of the carbon material have a correlation. In conventionally known globular graphite particles, there is a relation $y \approx 0.13x$, where x represents a BET specific surface area ($m^2/g$) and y represents an amount of methylene blue adsorbed ($\mu$mol/g). This indicates that a larger BET specific surface area gives a larger amount of methylene blue adsorbed. Therefore, the amount of methylene blue adsorbed can be another index of the BET specific surface area.

In the present invention, the ratio y/x of the carbon material is preferably 0.15 or higher, as described above. By contrast, in conventional globular graphite particles, the ratio y/x is 0.13. Therefore, in the case where the ratio y/x is 0.15 or higher, the carbon material has a larger amount of methylene blue adsorbed than conventional globular graphite particles, though having the same BET specific surface area. That is, in this case, although the carbon material somewhat condenses in a dry state, graphene layer spacings or graphite layer spacings can be much more expanded in a wet state such as in methanol than in the dry state.

In the present invention, when the above-mentioned carbon material having a graphite structure in which the graphite is partially exfoliated is designated, for example, as a first carbon material, a second carbon material other than the first carbon material may be contained. The second carbon material is a carbon material different from the first carbon material and has no structure in which graphite is partially exfoliated. The second carbon material is not especially limited, and examples thereof include graphene, granular graphite compounds, fibrous graphite compounds and carbon black. Then, the first carbon material may be a carbon material other than the carbon material having a graphite structure in which the graphite is partially exfoliated.

The graphene may be graphene oxide or may be a reduced graphite oxide.

The granular graphite compounds are not especially limited, and examples thereof include natural graphite, artificial graphite and expanded graphite.

The fibrous graphite compounds are not especially limited, and examples thereof include carbon nanohorns, carbon nanotubes and carbon fibers.

The carbon black is not especially limited, and examples thereof include furnace black, Ketjen black and acetylene black.

The first carbon material having a graphite structure in which the graphite is partially exfoliated and the second carbon material having no structure in which graphite is partially exfoliated can be distinguished, for example, by SEM, TEM or the like.

Containing the first carbon material and the second carbon material means, for example, that the first carbon material and the second carbon material are present in a composite, a positive electrode or a negative electrode described later. A method of making present the first carbon material and the second carbon material is not especially limited, but may be a method involving mixing them in fabrication of the composite, the positive electrode or the negative electrode described later, or may be a method involving fabricating a composite described later with one of the carbon materials and thereafter adding the other carbon material.

The second carbon material may have functional groups on the surface. In this case, it is much easier to fabricate the composite, the positive electrode or the negative electrode described later.

In the present invention, the ratio M/N is preferably in the range of 0.01 or higher and 100 or lower, where M represents a weight of the first carbon material and N represents a weight of the second carbon material. In the case where the ratio M/N is in the above range, the resistance of electrodes in an all-solid-state battery can be much lower. Hence, when the carbon material is used for the all-solid-state battery, the heat generation in charge and discharge at a large current can be much more reduced.

In view of reducing the resistance of electrodes in an all-solid-state battery much more, the ratio M/N is preferably 0.05 or higher and more preferably 0.1 or higher, and preferably 20 or lower and more preferably 10 or lower.

The carbon material according to the present invention can form good electron conduction paths and ionic conduction paths in electrodes such as a positive electrode and a negative electrode of an all-solid-state battery, as described above. Hence, the carbon material can be more suitably used as an electroconductive auxiliary agent in the positive electrode and the negative electrode of the all-solid-state battery.

(All-solid-state battery)

The all-solid-state battery according to the present invention can be constituted, for example, of a positive electrode, a solid electrolyte and a negative electrode. A method for fabricating the all-solid-state battery is preferably as follows: the positive electrode and the negative electrode are fabricated, and thereafter, the solid electrolyte is interposed between the positive electrode and the negative electrode, and pressed. Here, after the pressing, a heat treatment may be carried out in order to promote unifying each interface.

The all-solid-state battery according to the present invention can form good electron conduction paths and ionic conduction paths in the positive electrode and the negative electrode, since it comprises the carbon material according to the present invention in the positive electrode and/or the negative electrode. Hence, there can be provided the all-solid-state battery excellent in the battery characteristics such as the cycle characteristic.

Hereinafter, each member constituting the all-solid-state battery will be described in detail.

The positive electrode of the all-solid-state battery:

The positive electrode of the all-solid-state battery according to the present invention comprises, at least, the following positive electrode active material, a solid electrolyte and a carbon material. Since the above-mentioned carbon material according to the present invention is contained as the carbon material, the battery characteristics represented by the cycle characteristic and the rate characteristic can be improved. Here, as the solid electrolyte, those described in a paragraph of a solid electrolyte later can be used.

The positive electrode active material should have a nobler battery reaction potential than that of a battery reaction of a negative electrode active material described later. At this time, the battery reaction may involve participation of group 1 or group 2 ions therein; examples of such ions include H ions, Li ions, Na ions, K ions, Mg ions, Ca ions and Al ions. Hereinafter, a system in which Li ions take part in the battery reaction, as an example, will be described in detail.

For this case, examples of the positive electrode active material include lithium metal oxides, lithium sulfide and sulfur.

Examples of the lithium metal oxide include those having a spinel structure, a layer rock salt structure or an olivine structure.

The surface of the positive electrode active material may be coated with a Li-Nb oxide or the like in order to allow Li ions to migrate much easily at the interface between the positive electrode active material and the solid electrolyte.

The positive electrode for an all-solid-state battery may consist of the positive electrode active material, the carbon material and the solid electrolyte, or may further contain a binder in view of much more easily forming the positive electrode.

The binder is not especially limited, but there can be used, for example, at least one resin selected from the group consisting of polyvinylidene fluoride (PVdF), polytetrafluoroethylene (PTFE), styrene-butadiene rubber, polyimide and derivatives thereof.

A method for fabricating the positive electrode for an all-solid-state battery according to the present invention may involve collectively mixing the electrode active material, the carbon material and the solid electrolyte and thereafter carrying out molding, may involve fabricating a positive electrode active material-carbon material composite, thereafter mixing the solid electrolyte, and carrying out molding, or may involve fabricating a positive electrode active material-solid electrolyte composite, thereafter mixing the carbon material, and carrying out molding.

The positive electrode active material-carbon material composite is fabricated, for example, by the following procedure.

First, there a dispersion liquid in which the carbon material according to the present invention is dispersed in a solvent (hereinafter, a dispersion liquid of the carbon material) is fabricated. Separately from the dispersion liquid, there a dispersion liquid of the positive electrode active material in which the positive electrode active material is dispersed in a solvent (hereinafter, a dispersion liquid of the positive electrode active material)is fabricated. Then, the dispersion liquid of the carbon material and the dispersion liquid of the positive electrode active material are mixed. Finally, by removing the solvent in the mixed liquid of the dispersion liquids containing the carbon material and the positive electrode active material, the composite of the positive electrode active material and the carbon material (active material-carbon material composite) to be used for the positive electrode is fabricated.

Besides the above-mentioned fabrication method, the following method may be used: the positive electrode active material is added to the dispersion liquid of the carbon material to thereby fabricate a dispersion liquid containing the carbon material and the positive electrode active material, and thereafter, the solvent is removed. Alternatively, another method may be used which involves mixing, by a mixer, a mixture of the carbon material, the positive electrode active material and a solvent, that is, combining fabrication of a slurry of the positive electrode as described later and fabrication of the composite.

In the case where a resin is contained in the carbon material, the resin may be removed by a heat treatment.

The solvent for dispersing the positive electrode active material or the carbon material may be an aqueous solvent, a nonaqueous solvent, a mixed solvent of an aqueous solvent with a nonaqueous solvent, or a mixed solvent of different nonaqueous solvents. The solvent for dispersing the carbon material and the solvent for dispersing the positive electrode active material may be the same or different. In the case where the solvents are different, it is preferable that the solvents have compatibility with each other.

The nonaqueous solvent is not especially limited, but for example, in view of easy dispersibility, an alcoholic solvent represented by methanol, ethanol and propanol, or a nonaqueous solvent such as tetrahydrofuran or N-methyl-2-pyrrolidone can be used. Further in order to much more improve the dispersibility, dispersants such as surfactants may be contained in the solvent.

A dispersing method is not especially limited, but examples thereof include dispersing by ultrasonic waves, by a mixer, by a jet mill, or by a stirring bar.

The concentration of the carbon material in the dispersion liquid is not especially limited, but the weight of the solvent is preferably 1 or larger and 1,000 or smaller when the weight of the carbon material is taken as 1. In view of much more enhancing the handleability, the weight of the solvent is more preferably 5 or larger and 750 or smaller when the weight of the carbon material is taken as 1. Further in view of much more enhancing the dispersibility, the weight of the solvent is still more preferably 5 or larger and 500 or smaller when the weight of the carbon material is taken as 1.

In the case where the weight of the solvent is smaller than the lower limit described above, the carbon material cannot be dispersed to a desired disperse state in some cases. On the other hand, in the case where the weight of the solvent is larger than the upper limit described above, the production cost increases in some cases.

The concentration of the positive electrode active material in the dispersion liquid is not especially limited, but the weight of the solvent is preferably 0.5 or larger and 100 or smaller when the weight of the positive electrode active material is taken as 1. In view of much more enhancing the handleability, the weight of the solvent is more preferably 1 or larger and 75 or smaller. Further in view of much more enhancing the dispersibility, the weight of the solvent is still more preferably 5 or larger and 50 or smaller. In the case where the weight of the solvent is smaller than the lower limit described above, the positive electrode active material cannot be dispersed to a desired disperse state in some cases. On the other hand, in the case where the weight of the solvent is larger than the upper limit described above, the production cost increases in some cases.

A method of mixing the dispersion liquid of the positive electrode active material and the dispersion liquid of the carbon material is not especially limited, but examples thereof include a method involving mixing both the dispersion liquids at one time, and a method involving adding one of the dispersion liquids to the other thereof in several times.

Examples of the method of adding one of the dispersion liquids to the other thereof in several times include a method involving dropping by using a dropping implement such as a syringe, a method involving using a pump, and a method involving using a dispenser.

A method of removing the solvent from the mixture of the carbon material, the positive electrode active material and the solvent is not especially limited, but examples thereof includes a method involving removing the solvent by filtration and thereafter drying the resultant by an oven or the like. It is preferable in view of much more enhancing the productivity that the filtration be suction filtration. The case where the drying method involves drying in an air-blast oven and thereafter drying under vacuum is preferable because the solvent remaining in pores can be removed.

In the present invention, with regard to the ratio between the positive electrode active material and the carbon material in the active material-carbon material composite, the weight of the carbon material is preferably 0.2 or larger and 100 or smaller when the weight of the positive electrode active material is taken as 100. In view of much more improving the rate characteristic, the weight of the carbon material is more preferably 0.3 or larger and 80 or smaller. Further in view of much more improving the cycle characteristic, the weight of the carbon material is still more preferably 0.5 or larger and 50 or smaller.

It is preferable that fabrication of the composite of the solid electrolyte and the positive electrode active material according to the present invention use, for example, a method involving mixing the positive electrode active material and the solid electrolyte by a mixer or the like, or a method involving mixing them by mechanical milling or the like.

The mixer to be used for the mixing is not especially limited, but includes a planetary mixer, a disperser, a thin-film spin system mixer, a jet mixer and a rotary and revolutionary mixer.

The mechanical milling method to be used for the mixing includes use of a ball mill, a bead mill and a rotary kiln.

In order to improve adhesion between the positive electrode active material and the solid electrolyte, a heat treatment may be carried out.

Examples of a method of molding the positive electrode include a method in which the positive electrode active material and the solid electrolyte are mixed by a mixer, mechanical milling or the like, and thereafter molded by pressing. The molding by pressing may be carried out on the positive electrode alone, or may be carried out collectively on the positive electrode together with a solid electrolyte layer and a negative electrode described later.

Further, particularly in the case of using an oxide-based solid electrolyte, a heat treatment may be carried out after the molding in order to much more improve moldability of the solid electrolyte.

With regard to the ratio between the solid electrolyte and the positive electrode active material contained in the positive electrode, the weight of the solid electrolyte is preferably 0.1 to 200 with respect to 100 of the weight of the positive electrode active material.

In the case where the weight of the solid electrolyte is lower than 0.1, the formation of electron conduction paths and the formation of lithium ion conduction paths are difficult in some cases. On the other hand, in the case where the weight of the solid electrolyte is higher than 200, the energy density of the all-solid-state battery decreases in some cases.

The thickness of the positive electrode for an all-solid-state battery according to the present invention is not especially limited, but is preferably 10 $\mu$m or larger and 1,000 $\mu$m or smaller. With the thickness smaller than 10 $\mu$m, a desired capacity cannot be attained in some cases. On the other hand, in the case where the thickness is larger than 1,000 $\mu$m, it is difficult to attain a desired output density in some cases.

In the positive electrode for an all-solid-state battery according to the present invention, the electric capacity per 1 $cm^2$ of the positive electrode is preferably 0.5 mAh or higher and 100.0 mAh or lower. In the case where the electric capacity is lower than 0.5 mAh, the volume of the battery having a desired capacity is large in some cases. On the other hand, in the case where the electric capacity is higher than 100 mAh, it is difficult to attain a desired output density in some cases. The electric capacity per 1 $cm^2$ of the positive electrode is more preferably 0.8 mAh or higher and 50 mAh or lower in view of a better relationship between the magnitude of the volume and the output density of the battery. The electric capacity per 1 $cm^2$ of the positive electrode is especially preferably 1.0 mAh or higher and 20 mAh or lower. Here, the calculation of the electric capacity per 1 $cm^2$ of the positive electrode may also be made by fabricating a half cell with lithium metal as a counter electrode after fabrication of the positive electrode for an all-solid-state battery, and determining charge and discharge characteristics.

The electric capacity per 1 $cm^2$ of the positive electrode for an all-solid-state battery is not especially limited, but can be controlled by the weight of the positive electrode formed on per unit area of a current collector.

The negative electrode of the all-solid-state battery:

As the negative electrode of the all-solid-state battery according to the present invention, lithium metal or a lithium alloy can be used, but a material containing, at least, a negative electrode active material, a solid electrolyte and a carbon material can be used.

For the negative electrode of the all-solid-state battery according to the present invention, the same materials as used in the above positive electrode can be used, excluding the following negative electrode active material. Therefore, as the production method and the constitution of the negative electrode, the same method and the same constitution as for the positive electrode can be used. Therefore, in place of the composite of the positive electrode active material and the carbon material, a composite of the negative electrode active material and the carbon material can be used.

The negative electrode active material should have a less noble battery reaction potential than that of the positive electrode active material. At this time, the battery reaction may involve participation of group 1 or group 2 ions therein; examples of such ions include H ions, Li ions, Na ions, K ions, Mg ions, Ca ions and Al ions. Hereinafter, a system in which Li ions take part in the battery reaction, as an example, will be described in detail.

Examples of the negative electrode active material to be used in the present invention include lithium metal, lithium metal oxides, carbon materials, metal compounds and organic compounds.

The above metal is not especially limited, for example, as long as it is reactive and alloyable with lithium ions, and examples thereof include Li, Mg, Ca, Al, Si, Ge, Sn, Pb, As, Sb, Bi, Ag, Au, Zn, Cd, Hg and In. Among these, in view of much more improving the volume energy density and the weight energy density, preferable is Li, Al, Si, Ge, Sn, Ti, Pb or In; and more preferable is Li, Si, Sn or Ti. Si or Sn is still more preferable because the reactivity with lithium ions is much higher.

These metals may be used singly or may be an alloy containing two or more kinds thereof. These metals may be a mixture of two or more kinds thereof. Further in order to much more improve the stability, the metals may be an alloy containing metals other than the above metal, or doped with a non-metallic element such as P or B.

Examples of the above metal compound include metal oxides, metal nitrides and metal sulfides. In view of much more enhancing the stability, metal oxides are preferable. The metal oxide is preferably a silicon oxide, tin oxide, titanium oxide, tungsten oxide, niobium oxide or molybdenum oxide because these oxides have a much higher reactivity with lithium ions.

The metal oxides may be used singly or may be an oxide of an alloy constituted of two or more thereof. The metal oxides may be a mixture of two or more thereof. Further in order to much more improve the stability, the metal oxide may be one doped with a heterogeneous metal or a non-metallic element such as P or B.

In the case of the titanium oxides, the titanium oxides also include lithium titanate and $H_2Ti_{12}O_{25}$.

Examples of the above carbon materials include artificial graphite and hard carbon.

The particle diameter of particles of the negative electrode active material is preferably 0.001 $\mu m$ or larger and 50 $\mu m$ or smaller. In view of much more enhancing the handleability, the particle diameter is more preferably 0.01 $\mu m$ or larger and 30 $\mu m$ or smaller. The particle diameter is a value obtained by measuring the size of each particle in a SEM or TEM image and calculating an average particle diameter thereof. Here, the particle diameter may be a size of a single crystal, or a size of a granule of a single crystal.

Examples of the organic materials include organic materials such as polyacene.

The solid electrolyte:

The solid electrolyte may have the conduction capability for group 1 or group 2 ions in the battery reaction; examples of such ions include H ions, Li ions, Na ions, K ions, Mg ions, Ca ions and Al ions. Hereinafter, a system in which Li ions take part in the battery reaction, as an example, will be described in detail.

Examples of the solid electrolyte include inorganic solid electrolytes and organic solid electrolytes. Examples of the inorganic solid electrolytes include sulfide-based solid electrolytes, and oxide-based solid electrolytes; and examples of the organic solid electrolytes include polymer-based solid electrolytes.

The sulfide-based solid electrolytes are compounds containing, at least, lithium and sulfur. Examples of the compounds include compounds represented by the formula: $Li_lX_mS_n$. Here, X is one or more elements other than Li and S; and 1, m and n are in the ranges of $0.5 \le 1 \le 10$, $0 \le m \le 10$, and $1 \le n \le 10$.

It is preferable that X in the above formula be contained, because the sulfide-based solid electrolyte has a much larger effect of improving the stability in itself and the lithium ion conductivity. In this case, X is preferably at least one of group 12, group 13, group 14, group 15, group 16 and group 17 elements. In view of improving the stability of the sulfide-based solid electrolyte itself, X is more preferably at least one selected from the group consisting of Zn, Al, Si, P, Ge, Sn, Sb, Cl and I. Here, X may be of a single kind or two or more kinds.

In the case of $1 < 0.5$ or $1 > 10$, the conductivity of lithium ions decreases in some cases.

1 preferably satisfies $0.5 \le 1 \le 8$ in view of much more improving the conductivity of lithium ions. Further, $1 \le$ m and $n \le 6$ is more preferable, in that the stability of the solid electrolyte itself is much more improved.

Examples of such sulfide-based solid electrolytes include $Li_2S$-$P_2S_5$-based, $LiI$-$Li_2S$-$P_2S_5$-based, $LiI$-$Li_2S$-$B_2S_3$-based, $LiI$-$Li_2S$-$SiS_2$-based, and thiosilicon-based solid electrolytes.

Examples thereof also include LGPS type solid electrolytes represented by $Li_{10+\delta}M_{1+\delta}P_{2-\delta}S_{12}$ ($0 \le \delta \le 0.35$, M=Ge, Si, Sn) and $Li_{9.54}M_{1.74}P_{1.44}S_{11.7}Cl_{0.3}$ (M=Ge, Si, Sn), which have a high lithium ion conductivity, and an argyrodite type solid electrolytes represented by $Li_{7-\sigma}PS_{6-\sigma}Cl_\sigma$ ($0 < \sigma < 1.8$).

Among the sulfide-based solid electrolytes, preferable are $(A)Li_2S$-$(1-A)GeS_2$, $(A)Li_2S$-$(B)GeS_2$-$(1-A-B)ZnS$, $(A)Li_2S$-$(1-A)Ga_2S_2$, $(A)(B)Li_2S$-$(C)GeS_2$-$(1-A-B-C)Ga_2S_3$, $(A)Li_2S$-$(B)GeS_2$-$(1-A-B)P_2S_5$, $(A)Li_2S$-$(B)GeS_2$-$(1-A-B)Sb_2S_5$, $(A)Li_2S$-$(B)GeS_2$-$(1-A-B)Al_2S_3$, $(A)Li_2S$-$(1-A)SiS_2$, $(A)Li_2S$-$(1-A)P_2S_5$, $(A)Li_2S$-$(1-A)Al_2S_3$, $(A)Li_2S$-$(B)SiS_2$-$(1-A-B)Al_2S_3$, $(A)Li_2S$-$(B)SiS_2$-$(1-A-B)P_2S_5$, $Li_{10+\delta}M_{1+\delta}P_{2-\delta}S_{12}$ ($0 \le \delta \le 0.35$, M=Ge, Si, Sn), $Li_{9.54}M_{1.74}P_{1.44}S_{11.7}C_{10.3}$ (M=Ge, Si, Sn) and $Li_{7-\sigma}PS_{6-\sigma}Cl_\sigma$ ($0 < \sigma < 1.8$), in view of the much higher stability and lithium ion conductivity and additionally ease of fabrication of electrodes. Here, A, B and C are integers satisfying $0 \le A, B, C < 1$ and $A + B + C < 1$.

Among the solid electrolytes, especially preferable are $Li_2S$-$P_2S_5$, $Li_2S$-$GeS_2$, $Li_2S$-$SiS$, $Li_{10+\delta}M_{1+\delta}P_{2-\delta}S_{12}$ ($0 \le \delta \le 0.35$, M=Ge, Si, Sn), $Li_{9.54}M_{1.74}P_{1.44}S_{11.7}Cl_{0.3}$ (M=Ge, Si, Sn) and $Li_{7-\sigma}PS_{6-\sigma}Cl_\sigma$ ($0 < \sigma < 1.8$), in view of the much higher stability and lithium ion conductivity and additionally ease of fabrication of electrodes.

The solid electrolyte may further contain Na and the like.

The oxide-based solid electrolytes are compounds containing, at least, lithium and oxygen. Examples of the compounds include phosphoric acid compounds having a NASICON structure, and substituted products in which a part of the phosphoric acid compound has been substituted by another element. There can also be used lithium ion conductors having a garnet-type structure or a garnet-familiar-type structure, such as $Li_7La_3Zr_2O_{12}$-based lithium ion conductors, and oxide-based solid electrolytes having a perovskite-type structure or a perovskite-familiar-type structure, such as Li-La-Ti-O-based lithium ion conductors.

Examples of the oxide-based solid electrolytes include $Li_7La_3Zr_2O_{12}$, $Li_7La_3Zr_{2-k}Nb_kO_{12}$, $Li_7La_3Zr_{2-k}Ta_kO_{12}$, $Li_5La_3Ta_2O_{12}$, $Li_{0.33}La_{0.55}TiO_3$, $Li_{1.5}Al_{0.5}Ge_{1.5}P_3O_{12}$, $Li_{1.3}Al_{0.3}Ti_{1.7}P_3O_{12}$, $Li_3PO_4$, $Li_4SiO_4$-$Li_3PO_4$, $Li_4SiO_4$ and $Li_3BO_3$. In this case, the stability and the lithium ion conductivity are much higher and additionally, the fabrication of electrodes is easy. For k in the above formula, $0 < k < 2$.

The solid electrolyte according to the present invention may further contain minute amounts of elements other than these elements.

Examples of the polymer-based solid electrolytes include polymers such as polyethylene oxide, polypropylene oxide and polyethylene glycol.

Examples

Hereinafter, the present invention will be described more specifically by way of Examples, but the present invention is no way limited to Examples, and changes and modifications may suitably be made without changing its gist.

(Production Example 1 of carbon material)

First, a mixture of 16 g of an expanded graphite, 0.48 g of a carboxymethylcellulose and 530 g of water was irradiated with ultrasonic waves for 5 hours by an ultrasonic treatment apparatus, and thereafter, 80 g of a polyethylene glycol was added thereto and mixed by a homomixer for 30 min to thereby fabricate a raw material composition.

The expanded graphite used was a product, trade name "PF Powder 8F" (BET specific surface area: 22 $m^2/g$), manufactured by Toyo Tanso Co., Ltd. The carboxymethylcellulose used was a product (average molecular weight: 250,000) manufactured by Sigma-Aldrich Corp. The polyethylene glycol used was a product, trade name "PG600", manufactured by Sanyo Chemical Industries, Ltd. The ultrasonic treatment apparatus used was an apparatus, model number "UH-600SR", manufactured by SMT. Co., Ltd.; and the homomixer used was a mixer "T.K.HOMOMIXER MARKII", manufactured by Tokushu Kika Kogyo KK.

Then, the fabricated raw material composition was heat treated at 150°C to remove water. Thereafter, the composition from which water had been removed was heat treated at a temperature of 380°C for 1 hour to thereby fabricate a carbon material in which a part of the polyethylene glycol remained.

Finally, the fabricated carbon material was heat treated at 400°C for 30 min and at 350°C for 2 hours to thereby obtain a carbon material having a graphite structure in which the graphite was partially exfoliated. The obtained carbon material contained 12% by weight of a resin with respect to the total weight. Here, the resin amount was calculated by measuring a weight loss, which was taken as the amount of the resin, in the heating temperature range of 200°C to 600°C by using TG (manufactured by Hitachi High-Tech Science Corp., item number: "STA7300").

The D/G ratio, which was a peak intensity ratio between the D band and the G band of a Raman spectrum of the obtained carbon material, was determined, and was found to be 0.234.

The BET specific surface area of the obtained carbon material was measured by using a specific surface area measuring instrument (manufactured by Shimadzu Corp., item number: "ASAP-2000", nitrogen gas), and was found to be 95 $m^2/g$.

The amount of methylene blue adsorbed of the obtained carbon material was measured by the following procedure, and was found to be 69.7 $\mu$mol/g. The ratio y/x, where x represented the BET specific surface area and y represented the amount of methylene blue adsorbed, was 0.733.

The measurement of the amount of methylene blue adsorbed was carried out as follows. First, there were prepared methanol solutions of methylene blue (manufactured by Kanto Chemical Co., Inc., analytical grade reagent) of a methylene blue concentration of 10.0 mg/L, 5.0 mg/L, 2.5 mg/L and 1.25 mg/L. The absorbance of the each solution was measured by an ultraviolet-visible spectrometer (manufactured by Shimadzu Corp., item number: "UV-1600") and a calibration curve was fabricated. Then, a 10-mg/L methylene blue solution was prepared; the carbon material as a measurement subject (0.005 to 0.05 g, varied according to the BET value of the sample), the methylene blue solution (10 mg/L, 50 mL) and a stirrer bar were placed in a 100-mL recovery flask, treated by an ultrasonic washer (manufactured by As One Co., Ltd.) for 15 min, and thereafter stirred in a cooling bath (25°C) for 60 min. After reaching the adsorption equilibrium, the resultant was separated to the carbon material and a supernatant liquid by centrifugation. The absorbances of the 10-mg/L methylene blue solution as the blank and the supernatant liquid were measured by the ultraviolet-visible spectrometer, and the difference in absorbance between the blank and the supernatant liquid was calculated.

```
Amount of methylene blue adsorbed (mol/g) = {amount of
reduction of concentration of methylene blue solution (g/L)
× volume of measuring solvent (L)}/{molecular weight of
methylene blue (g/mol) × mass of carbon material used for
measurement (g)} ⋯ Expression
```

Then the obtained carbon material and a silicon powder (Nano Powder, purity: ≥98%, particle diameter: ≤100 nm, manufactured by Sigma-Aldrich Corp.) were mixed in a ratio of 1 : 1 in a sample bottle to thereby fabricate a mixed powder as a measuring sample. The fabricated mixed powder was put in a reflection-free Si sample stage, which was then set in an X-ray diffractometer (Smart Lab, manufactured by Rigaku Corp.). Thereafter, an X-ray diffraction spectrum was measured by a wide-angle X-ray diffractometry under the conditions of an X-ray source of CuKα (wavelength: 1.541 Å), a measuring range of 3° to 80°, and a scanning speed of 5°/min. From the acquired measurement result, a height b of the highest peak in the range of 2θ = 28° or larger and smaller than 30° was normalized as 1, and a height a of the highest peak in the range of 2θ = 24° or larger and smaller than 28° at this time was calculated. Finally, the ratio between a and b, a/b was calculated.

As a result, the ratio between the height a of the highest peak in the range of 2θ = 24° or larger and smaller than 28° and the height b of the highest peak in the range of 2θ = 28° or larger and smaller than 30°, a/b, was 0.647.

(Production Example 2 of carbon material)

First, 6 g of an expanded graphite powder (manufactured by Toyo Tanso Co., Ltd., trade name: "PF Powder 8F", BET specific surface area: 22 $m^2/g$, average particle diameter: 10 $\mu$m), 0.2 g of a carboxymethylcellulose sodium salt, 200 g of water and 6 g of a polyethylene glycol were mixed by a homomixer for 30 min to thereby fabricate a raw material composition.

The carboxymethylcellulose sodium salt used was a product (average molecular weight: 250,000) manufactured by Sigma-Aldrich Corp. The polyethylene glycol used was a product, trade name "PG600", manufactured by Sanyo Chemical Industries, Ltd. The homomixer used was a mixer "T.K.HOMOMIXER MARKII", manufactured by Tokushu Kika Kogyo KK.

Then, the fabricated raw material composition was heat treated at 150°C to remove water. Thereafter, the composition from which water had been removed was heat treated at 370°C for 1 hour to thereby fabricate a carbon material in which a part of the polyethylene glycol remained.

Finally, the fabricated carbon material was heat treated at 420°C for 0.5 hour to thereby obtain a carbon material having a graphite structure in which the graphite was partially exfoliated. The obtained carbon material contained 0.5% by weight of a resin with respect to the total weight. Here, the resin amount was calculated by measuring a weight loss, which was taken as the amount of the resin, in the heating temperature range of 200°C to 600°C by using TG (manufactured by Hitachi High-Tech Science Corp., item number: "STA7300").

The D/G ratio, the ratio y/x and the ratio a/b, as measured in the same manner as for the carbon material in Production Example 1, were as follow: D/G ratio 0.700; ratio y/x 0.53; and ratio a/b 0.8.

(Production Example 1 of sulfide-based solid electrolyte powder)

$0.8Li_2S-0.2P_2S_5$ as a sulfide-based solid electrolyte to be mixed in an electrode layer of each sample was fabricated by the following procedure.

First, $Li_2S$ (manufactured by Furuuchi Chemical Corp.) and $P_2S_5$ (manufactured by Sigma-Aldrich Corp.) were weighed in a molar ratio of 80 : 20 in an argon atmosphere in a glove box (manufactured by Miwa Manufacturing Co., Ltd.).

Then, the weighed raw material was put in a zirconia pot together with zirconia balls, and mechanically milled by a planetary ball mill (manufactured by Fritsch Japan Co., Ltd., P-6 type) in an argon atmosphere at a rotation frequency of 540 rpm for 9 hours.

Finally, by separating the resultant from the zirconia balls, a powder of $0.8Li_2S-0.2P_2S_5$ was fabricated, which was a sulfide-based solid electrolyte to be used for Examples of the present invention.

(Production Example 2 of sulfide-based solid electrolyte powder)

$Li_{10}Ge_1P_2S_{12}$ as a sulfide-based solid electrolyte to be mixed in an electrode layer of each sample was fabricated by the following procedure. First, $Li_2S$ (manufactured by Furuuchi Chemical Corp.), $P_2S_5$ (manufactured by Sigma-Aldrich Corp.) and $GeS_2$ (manufactured by Sigma-Aldrich Corp.) were weighed in a molar ratio of 5 : 1 : 1 in an argon atmosphere in a glove box (manufactured by Miwa Manufacturing Co., Ltd.).

Then, the weighed raw material was put in a zirconia pot together with zirconia balls, and mechanically milled by a planetary ball mill (manufactured by Fritsch Japan Co., Ltd., P-6 type) in an argon atmosphere at a rotation frequency of 540 rpm for 9 hours.

Further, the resultant was pelletized, then heat treated at 550°C for 8 hours, thereafter slowly cooled to room temperature, and pulverized to thereby fabricate a powder of $Li_{10}Ge_1P_2S_{12}$, which was a sulfide-based solid electrolyte.

(Production Example of oxide-based solid electrolyte powder)

A powder of $Li_{1.5}Al_{0.5}Ge_{1.5}(PO_4)_3$ as an oxide-based lithium ion-conductive solid electrolyte to be mixed in an electrode layer of each sample was fabricated by the following procedure.

First, $GeO_2$ (manufactured by Kanto Chemical Co., Inc.), $Li_2CO_3$ (manufactured by Wako Pure Chemical Industries, Ltd.), $(NH_3)_2HPO_4$ (manufactured by Kishida Chemical Co., Ltd.) and $Al_2O_3$ (manufactured by Kojundo Chemical Laboratory Co., Ltd.) were weighed in a molar ratio of Li : Al : Ge : $PO_4$ = 1.5 : 0.5 : 1.5 : 3.

Then, these together with zirconia balls were put in an alumina pot, and pulverized and mixed in an ethanol solvent.

Further, the ethanol was vaporized; and the resultant was heat treated at 900°C for 2 hours. The sample after the heat treatment were put together with zirconia balls, and pulverized and mixed in an ethanol solvent.

Finally, the sample after the pulverization and mixing was dried to vaporize the ethanol to thereby obtain a powder of $Li_{1.5}Al_{0.5}Ge_{1.5}(PO_4)_3$, which was an oxide-based lithium ion-conductive solid electrolyte.

(Example 1)

Fabrication of positive electrode active material-carbon material composite:

A composite of a positive electrode active material ($LiCoO_2$, CS-5, manufactured by Nippon Chemical Industrial Co., Ltd.) and the carbon material of Production Example 1 was fabricated by the following procedure.

First, 59.4 g of ethanol was added to 0.6 g of the carbon material fabricated in Production Example 1, and treated with an ultrasonic washer (manufactured by As One Corp.) for 2 hours to thereby prepare a dispersion liquid 1 of the carbon material fabricated in Production Example 1 (hereinafter, a dispersion liquid 1 of the carbon material of Example 1).

Then, 2.4 g of the positive electrode active material was added to 21.6 g of ethanol, and the resultant was stirred by a magnetic stirrer at 600 rpm for 10 min to thereby prepare a dispersion liquid of the positive electrode active material of Example 1.

Then, the dispersion liquid of the positive electrode active material of Example 1 was dropped in the dispersion liquid 1 of the carbon material of Example 1 with a syringe. Here, during the dropping, the dispersion liquid 1 of the carbon material of Example 1 was continuously treated by the ultrasonic washer (manufactured by As One Corp.). Thereafter, the resultant mixed liquid of the dispersion liquid 1 of the carbon material of Example 1 and the dispersion liquid of the positive electrode active material of Example 1 was stirred for 2 hours by a magnetic stirrer.

Finally, the mixed liquid of the dispersion liquids was suction filtrated, and thereafter the filter cake was vacuum dried at 110°C for 1 hour to thereby fabricate a composite of the positive electrode active material and the carbon material (positive electrode active material-carbon material composite) of Example 1. Here, the amount of the composite necessary for fabrication of a positive electrode was fabricated by repeating the above procedure.

Fabrication of positive electrode:

A positive electrode of the present Example was fabricated by the following procedure.

First, the obtained positive electrode active material-carbon material composite and the sulfide-based solid electrolyte produced in Production Example 1 were weighed in a weight ratio of 80 : 20 (80% by weight, 20% by weight). Then, these materials were mixed by mechanical milling (planetary ball mill, manufactured by Fritsch Japan Co., Ltd., P-6 type, at a rotation frequency of 380 rpm, for 1 hour). Finally, the resultant mixed powder (25 mg) of the positive electrode active material-carbon material composite and the sulfide-based solid electrolyte, which was obtained through the above procedure, was placed on a SUS substrate (a diameter of 10 mm and a thickness of 0.5 mm) and press molded at 360 MPa to thereby fabricate a positive electrode of Example 1. Here, the procedure from the weighing of each material to the press molding, and the storage of the positive electrode were carried out in an argon atmosphere at -60°C or lower in dew point.

Fabrication of negative electrode active material-carbon material composite

A composite of a negative electrode active material and the carbon material of Production Example 1 was fabricated by the following procedure.

First, 1.5 g of ethanol was added to 0.015 g of the carbon material fabricated in Production Example 1, and treated with an ultrasonic washer (manufactured by As One Corp.) for 2 hours to thereby prepare a dispersion liquid 2 of the carbon material fabricated in Production Example 1 (hereinafter, a dispersion liquid 2 of the carbon material of Example 1).

Then, 2.4 g of a negative electrode active material (Si powder, manufactured by Sigma-Aldrich Corp.) was added to 21.6 g of ethanol, and the resultant was stirred by a magnetic stirrer at 600 rpm for 10 min to thereby prepare a dispersion liquid of the negative electrode active material of Example 1.

Then, the dispersion liquid of the negative electrode active material of Example 1 was dropped in the dispersion liquid 2 of the carbon material of Example 1 with a syringe. Here, during the dropping, the dispersion liquid 2 of the carbon material of Example 1 was continuously treated by the ultrasonic washer (manufactured by As One Corp.). Thereafter, the resultant mixed liquid of the dispersion liquid 2 of the carbon material of Example 1 and the dispersion liquid of the negative electrode active material of Example 1 was stirred for 2 hours by a magnetic stirrer.

Finally, the mixed liquid of the dispersion liquids was suction filtrated, and thereafter the filter cake was vacuum dried at 110°C for 1 hour to thereby fabricate a composite of the negative electrode active material and the carbon material of Example 1 (negative electrode active material-carbon material composite). Here, the amount of the composite necessary for fabrication of a negative electrode was fabricated by repeating the above procedure.

Fabrication of negative electrode:

A negative electrode of the present Example was fabricated by the following procedure.

First, the negative electrode active material-carbon material composite and the sulfide-based solid electrolyte were weighed in a weight ratio of 50 : 50 (50% by weight, 50% by weight). Then, these materials were mixed by mechanical milling (planetary ball mill, manufactured by Fritsch Japan Co., Ltd., P-6 type, at a rotation frequency of 380 rpm, for 1 hour). Finally, the resultant mixed powder (10 mg) of the negative electrode active material-carbon material composite and the sulfide-based solid electrolyte, which was obtained through the above procedure, was placed on a SUS substrate (a diameter of 10 mm and a thickness of 0.5 mm) and press molded at 360 MPa to thereby fabricate a negative electrode of Example 1. Here, the procedure from the weighing of each material to the press molding, and the storage of the negative electrode were carried out in an argon atmosphere at -60°C or lower in dew point.

Fabrication of all-solid-state battery:

An all-solid-state battery of the present Example was fabricated by the following procedure. First, for a solid electrolyte layer, by using the sulfide-based solid electrolyte fabricated in Production Example, a pellet (a diameter of 10 mm and a thickness of 500 $\mu$m) of the sulfide-based solid electrolyte was fabricated. Then, the positive electrode, the pellet of the sulfide-based solid electrolyte and the negative electrode were laminated in order so that the each SUS current collector faced the outside. Finally, the resultant laminate was pressed at a pressure of 50 MPa, and each member was fixed to thereby fabricate an all-solid-state battery.

(Example 2)

In Example 2, the powder of the oxide-based solid electrolyte fabricated in the above-mentioned Production Example was used as a solid electrolyte, in place of the sulfide-based solid electrolyte. The powder was molded into a pellet at 100 MPa and the pellet was heat treated at 850°C for 12 hours. Further for a solid electrolyte layer, a sintered material was used which was fabricated by molding the pellet of the oxide-based solid electrolyte into a diameter of 10 mm and a thickness of 500 $\mu$m, and thereafter heat treating the resultant at 850°C for 12 hours. An all-solid-state battery was fabricated in the same manner as in Example 1 with regard to the others.

(Example 3)

An all-solid-state battery was fabricated in the same manner as in Example 1, except for using the carbon material fabricated in Production Example 2 in place of the carbon material fabricated in Production Example 1.

(Example 4)

An all-solid-state battery was fabricated in the same manner as in Example 1, except for using the sulfide-based solid electrolyte fabricated in Production Example 2 in place of the sulfide-based solid electrolyte fabricated in Production Example 1.

(Example 5)

An all-solid-state battery was fabricated in the same manner as in Example 2, except for using the carbon material fabricated in Production Example 2 in place of the carbon material fabricated in Production Example 1.

(Example 6)

An all-solid-state battery was fabricated in the same manner as in Example 1, except for using an expanded graphite (manufactured by Toyo Tanso Co., Ltd., trade name: "PF Powder 8F", BET specific surface area: 22 m$^2$/g) in place of the carbon material fabricated in Production Example 1.
Here, The D/G ratio, the ratio y/x and the ratio a/b were as follows: D/G ratio 0.790; ratio y/x 0.35; and ratio a/b 2.2.

(Example 7)

An all-solid-state battery was fabricated in the same manner as in Example 6, except for using the sulfide-based solid electrolyte fabricated in Production Example 2 in place of the sulfide-based solid electrolyte fabricated in Production Example 1.

(Example 8)

An all-solid-state battery was fabricated in the same manner as in Example 2, except for using an expanded graphite (manufactured by Toyo Tanso Co., Ltd., trade name: "PF Powder 8F", BET specific surface area: 22 m$^2$/g) in place of the carbon material fabricated in Production Example 1.
Here, The D/G ratio, the ratio y/x and the ratio a/b were as follows: D/G ratio 0.790; ratio y/x 0.35; and ratio a/b 2.2.

(Comparative Example 1)

An all-solid-state battery was fabricated in the same manner as in Example 1, except for using an acetylene black in place of the carbon material fabricated in Production Example 1. The D/G ratio, where the D/G ratio was a peak intensity ratio between the D band and the G band of a Raman spectrum of the acetylene black, was 0.95. The ratio y/x, where x represented the BET specific surface area of the acetylene black and y represented the amount of methylene blue adsorbed thereon, was 0.12. Further an X-ray diffraction spectrum of the acetylene black was measured by the same method as in Example 1. As a result, the ratio between the height a of the highest peak in the range of $2\theta = 24°$ or larger and smaller than 28° and the height b of the highest peak in the range of $2\theta = 28°$ or larger and smaller than 30°, a/b, was 0.09.

(Comparative Example 2)

An all-solid-state battery was fabricated in the same manner as in Example 2, except for using the same acetylene black as in Comparative Example 1 in place of the carbon material fabricated in Production Example 1.

(Evaluation of cycle characteristic of nonaqueous electrolyte secondary batteries)

The evaluation of the cycle characteristic was carried out by the following method. First, the all-solid-state batteries of Examples 1 to 8 and Comparative Examples 1 and 2 were each put in a thermostatic chamber at 25°C, and connected to a charge and discharge apparatus (HJ1005SD8, manufactured by Hokuto Denko Corp.). Then, a cycle operation was carried out in which a constant-current/constant-voltage charge (current value: 1 mA, charge end voltage: 4.25 V, voltage of constant-voltage discharge: 4.25 V, end condition of constant-voltage discharge: an elapsed time of 3 hours, or a current value of 0.1 mA) and a constant-current discharge (current value: 1 mA, discharge end voltage: 2.5 V) were repeated 100 times. Finally, the ratio of the discharge capacity at the 100th cycle when the discharge capacity at the first cycle was taken as 100 was calculated, which was taken as a retention rate (cycle characteristic) of the discharge capacity.

The results of the cycle characteristic are collectively shown in Table 1. The judgment of acceptance in Table 1 was made according to the following criteria.

[Evaluation criteria]

Yes ··· The ratio (cycle characteristic) was 80% or higher.

No ··· The ratio (cycle characteristic) was lower than 80%.

As is clear from these results, it was confirmed that all the all-solid-state batteries of Examples 1 to 8 according to the present invention were better in the cycle characteristic than the all-solid-state batteries of Comparative Examples 1 and 2.

[Table 1]

|  | Cycle Characteristic (%) | Acceptance |
|---|---|---|
| Example 1 | 91 | Yes |
| Example 2 | 81 | Yes |
| Example 3 | 92 | Yes |
| Example 4 | 91 | Yes |
| Example 5 | 83 | Yes |
| Example 6 | 82 | Yes |
| Example 7 | 81 | Yes |
| Example 8 | 80 | Yes |
| Comparative Example 1 | 51 | No |
| Comparative Example 2 | 44 | No |

**Claims**

1. A carbon material to be contained in a positive electrode and/or a negative electrode of an all-solid-state battery comprising a group 1- or group 2-ionic conductive solid electrolyte,
   wherein in an X-ray diffraction spectrum of a mixture of the carbon material and Si in a weight ratio of 1 : 1, a ratio a/b is 0.2 or higher and 10.0 or lower, where a represents a height of the highest peak in the range of 2θ of 24° or larger and smaller than 28° and b represents a height of the highest peak in the range of 2θ of 28° or larger and smaller than 30°.

2. The carbon material according to claim 1, wherein the carbon material has a graphene layered structure.

3. The carbon material according to claim 1 or 2, wherein the carbon material has a two-dimensionally extending shape.

4. The carbon material according to any one of claims 1 to 3, wherein the carbon material is a carbon material having a graphite structure wherein the graphite is partially exfoliated.

5. The carbon material according to any one of claims 1 to 4, wherein a ratio y/x is 0.15 or higher where y represents an amount of methylene blue adsorbed (μmol/g) per 1 g of the carbon material as measured based on a difference in absorbance between a methanol solution of methylene blue of a concentration of 10 mg/L and a supernatant liquid obtained by adding the carbon material to the methanol solution of methylene blue and centrifuging a resulting mixture; and x represents a BET specific surface area ($m^2$/g) of the carbon material.

6. The carbon material according to any one of claims 1 to 5, wherein a D/G ratio is in the range of 0.05 or higher and 0.8 or lower, where a peak intensity ratio between the D band and the G band in a Raman spectrum of the carbon material is taken as the D/G ratio.

7. The carbon material according to any one of claims 1 to 6, wherein when the carbon material is designated as a first carbon material, the carbon material further comprises a second carbon material different from the first carbon material,
   wherein the carbon material satisfies $0.01 \leq M/N \leq 100$ where M represents a weight of the first carbon material and N represents a weight of the second carbon material.

8. A positive electrode for an all-solid-state battery, comprising the carbon material according to any one of claims 1 to 7, a positive electrode active material, and a group 1- or group 2-ionic conductive solid electrolyte.

9. The positive electrode for an all-solid-state battery according to claim 8, wherein the ionic conductive solid electrolyte is an oxide-based solid electrolyte or a sulfide-based solid electrolyte.

10. A negative electrode for an all-solid-state battery, comprising the carbon material according to any one of claims 1 to 7, a negative electrode active material, and a group 1- or group 2-ionic conductive solid electrolyte.

11. The negative electrode for an all-solid-state battery according to claim 10, wherein the ionic conductive solid electrolyte is an oxide-based solid electrolyte or a sulfide-based solid electrolyte.

12. An all-solid-state battery comprising the positive electrode for an all-solid-state battery according to claim 8 or 9 and/or the negative electrode for an all-solid-state battery according to claim 10 or 11.

## INTERNATIONAL SEARCH REPORT

International application No.

PCT/JP2018/028787

### A. CLASSIFICATION OF SUBJECT MATTER

Int.Cl. H01M10/0562(2010.01)i, C01B32/182(2017.01)i, C01B32/225(2017.01)i, H01M4/133(2010.01)i, H01M4/62(2006.01)i, H01M10/0565(2010.01)i, H01M4/131(2010.01)n

According to International Patent Classification (IPC) or to both national classification and IPC

### B. FIELDS SEARCHED

Minimum documentation searched (classification system followed by classification symbols)

Int.Cl. H01M10/0562, C01B32/182, C01B32/225, H01M4/133, H01M4/62, H01M10/0565, H01M4/131

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2012-243645 A (SUMITOMO ELECTRIC INDUSTRIES, LTD.) 10 December 2012, claims, paragraphs [0036], [0038]<br>(Family: none) | 1-3, 7-12<br>4-6 |
| Y | WO 2016/181952 A1 (SEKISUI CHEMICAL CO., LTD.) 17 November 2016, claims, paragraphs [0004]-[0008], [0107]-[0111], examples<br>& US 2018/0062179 A1, calims, paragraphs [0006]-[0010], [0118]-[0122], example & JP 2017-216254 A<br>& EP 3297075 A1 & CN 107210443 A & KR 10-2018-0006360 A & TW 201703321 A | 1-12 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04.10.2018 | 16.10.2018 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

## INTERNATIONAL SEARCH REPORT

| International application No. |
| --- |
| PCT/JP2018/028787 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2016-139482 A (SAMSUNG ELECTRONICS CO., LTD.) 04 August 2016, claims, paragraphs [0013]-[0069] (Family: none) | 1-12 |
| P, X | WO 2018/043481 A1 (SEKISUI CHEMICAL CO., LTD.) 08 March 2018, paragraph [0141], claims (Family: none) | 1-12 |
| P, A | WO 2018/062285 A1 (SEKISUI CHEMICAL CO., LTD.) 05 April 2018, claims (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014029777 A

- WO 2014034156 A

**Non-patent literature cited in the description**

- Lithium Secondary Battery. 2008, 163